# EUROPÄISCHE PATENTANMELDUNG

(11) **EP 1 060 972 A1**
(43) Veröffentlichungstag der Anmeldung: **20.12.2000**
(21) Anmeldenummer: 00112655.6
(22) Anmeldetag: 15.06.2000
(51) Int. Cl.: B61L 3/12, H04Q 7/32

(54) **Zugnummer-Vermittlungsverfahren**

(30) Priorität: 17.06.1999 DE 19927680
(71) Anmelder: Bendlin, Matthias, 18292 Lüdershagen (DE)
(72) Erfinder: Bendlin, Matthias, 18292 Lüdershagen (DE)

(57) **Zusammenfassung**

Ein Vermittlungsverfahren,mit dem Ziel, die Kommunikationsfähigkeit einer Eisenbahngesellschaft dadurch zu erhöhen,dass das Zugpersonal besser erreichbar ist.

Der Betriebsdienst in einer Eisenbahngesellschaft lässt sich dadurch besser organisieren.

Die Verknüpfung von Zug-und SIM-Karten_Nummer des Zugführers mittels eines Vermittlungscomputers mit Datenbank macht es möglich,jederzeit den Zugführer eines Zuges über die Zugnummer direkt zu rufen,oder die SIM-Kartennummer des Zugführers,die der Zugnummer entspricht,wie bei einer Auskunft ansagen zu lassen.

Das Vermittlungsverfahren kann nur von einer geschlos - senen und vordefinierten Benutzergruppe genutzt werden.

Es schützt sämtliche Zugführer vor ungebetenen Anrufern.

## Beschreibung

### 1. Stand der Technik

Es ist in letzter Zeit zu beobachten,daß Eisenbahngesellschaften ihr fahrendes Personal immer mehr mit Handys ausrüsten.

Man möchte diese Technik ausnutzen,um den Betriebsdienst besser koordinieren zu können. Außerdem erwartet man von Seiten der Reisenden,eine bessere Information beim Fahrplanwechsel,bei Verspätungen und anderen Unregelmäßigkeiten.

Die Deutsche Bahn AG faehrt beispielsweise mehrere tausend Personenzüge täglich.Das Problem bei der Kommunikation zwischen den Betriebsstellen und diesen Zügen sowie bei der Kommunikation zwischen den Zügen untereinander ist, daß niemand die SIM-Karten-Nummer des Zugführers kennt.

Schon alleine die Ungewißheit darüber,welche Nummer ein Handy haben könnte,hemmt die Kommunikationsbereitschaft enorm.

Selbst wenn ein Handy in einem Zug eine bestimmte Rufnummer hat,dann heißt das nicht,daß am nächsten Tag der selbe Zug unter der selben Rufnummer erreichbar ist.

Der Zugverkehr wird fast täglich anders organisiert,was auch eine andere Handyverteilung zur Folge hat.
(werktags,sonntags,feiertags)

Man kann durchaus sagen,daß die Rufnummer eines Handys unberechenbar veränderlich ist.Telefonbücher einzurichten hat auch keinen Zweck,weil Bücher statisch sind,der Betriebsdienst wird dagegen operativ organisiert.

Es müßte eine Ordnung in einer Eisenbahngesellschaft geben, die es möglich macht,einen Zug immer nach der selben Art und Weise zu erreichen,egal ob werktags,sonntags, ob pünktlich oder unpünktlich.

Das einzige,was ein Zug immer und in jeder Situation hat, ist eine eindeutige Zugnummer.

Man kann hundertprozentig sagen,daß jeder Betriebseisenbahner, der in die Verlegenheit kommt,einen Zugführer eines Zuges anrufen zu müssen,die eindeutige Zugnummer des entsprechenden Zuges weiß.

Ziel dieser Erfindung ist es nun,ein Verfahren anzubieten,daß es den Teilnehmern erlaubt,das Zugpersonal immer über die Zugnummer des Zuges zu erreichen, in dem sich das Zugpersonal gerade befindet.

Hierzu ist aus dem Stand der Technik die Druckschrift EP 0431453 bekannt,die ein Funksystem beschreibt,bei dem gruppenbezogene Objektbezeichnungen den Rufnummern zugeordnet werden können.

Nachteilig ist hierbei jedoch,daß die Rufnummer von der Tätigkeit des Teilnehmers abhängig gemacht wird,was die Sache unnötig verkompliziert. Da es bei Eisenbahngesellschaften keine zwei Züge zur selben Zeit mit derselben Zugnummer geben kann, ist es am einfachsten,der Handynummer des Zugpersonals die Zugnummer des Zuges,in dem er sich zur Zeit befindet direkt zuzuordnen,ohne Rücksicht auf deren Tätigkeit.

Außerdem ist aus DE 4307966 eine geschlossene Gruppe bekannt, die zu einem internen Netz Zugriff haben.Bei der vorliegenden Erfindung werden zwei geschlossene Benutzergruppen,denen Handy-oder Festnetznummern zugeordnet werden, vom Vermittlungscomputer kontrolliert.

Da eine SIM-Karten-Nummer sich nicht so verändern kann, wie sich die Zugnummern verändern, (je nach Fahrtrichtung u.s.w.),ist es erforderlich, einen Vermittlungcomputer einzurichten,der eine Datenbank besitzt,über die eine Verknüpfung zwischen Zug-und SIM-Karten-Nummer durchgeführt wird.

In nachfolgenden Beispielen wird der Vermittlungscomputer mit den zwei Nummern : 2020 und 2021 gerufen.

Der Vermittlungscomputer muß jederzeit wissen, unter welcher Handynummer ein Zugführer zu erreichen ist, solange der Zug unter dieser Nummer exestiert.

Der Vermittlungscomputer ist mit einer oder mehrerer ISDN-Karten ausgerüstet,die die Anrufe entgegennehmen u.s.w..

Die Datenbank entscheidet letztendlich,ob ein Anrufer überhaupt und mit wem er vermittelt wird.

Wie der Vermittlungscomputer eingerichtet wird,hängt letztendlich vom Bedarf einer Eisenbahngesellschaft ab.

Der Eisatz von Vermittlungscomputern wird beschrieben im Zusammenhang mit dem Callbackverfahren von Callbackanbietern im: "Das große Telefonwerkbuch"
vom Franzis-Verlag .(Seite 92/93) Bevor der Vermittlungscomputer Verknüpfungen durchführen kann,muß er wissen,welche Zugnummer mit welcher SIM-Karten-Nummer verknüpft werden soll.

Dazu muß seine Datenbank mit Daten gefüllt werden.

Dabei ist zu beachten,daß ein Zug beispielsweise zwei Stunden exestiert,danach die Zugnummer wechselt, und dann mit neuer Zugnummer mit der selben SIM-Karte zu erreichen sein soll.

Ein Zug,der z.B.den ganzen Tag von Bremen nach Hamburg pendelt,kann über den gesamten Tag zehn oder mehr verschiedene Zugnummern annehmen-die SIM-Karten-Nummer aber bleibt gleich,weil er mit dem selben Handy besetzt bleibt.

Es kann auch sein,daß das Handy aus organisatorischen Gründen nach fünf Zugfahrten ausgewechselt wird.

Auch auf diese Situation muß der Vermittlungscomputer vorbereitet sein.

Der Vermittlungscomputer muß jetzt jederzeit der sich ständig ändernden Zugnummer die entsprechende SIM-Karten-Nummer zuordnen.

Das heißt,er weiß von vornherein,um welche Uhrzeit ein Zug die Nummer wechselt, oder er wird ständig auf dem laufenden gehalten.

Der Vermittlungscomputer kann entweder eine statische oder eine variable Datenbank besitzen.

Bei einer statischen Datenbank werden die Zugnummmern und die entsrechenden SIM-Karten-Nummern in Abhängigkeit mit dem Datum und der Uhrzeit in die Datenbank eingegeben.

Die statische Datenbank wird einmal erstellt und braucht nicht ständig auf dem laufenden gehalten zu werden.

Wenn ein Eisenbahner den Vermittlungscomputer anruft, um entweder vermittelt zu werden,oder um die SIM-Karten-Nummer des Zuges als Auskunft zu erhalten, dann ermittelt der Vermittlungscomputer in Abhängigkeit von Datum und Uhrzeit die entsprechende SIM-Karten-Nummer.

Zusätzlich muß der Vermittlungscomputer beachten,ob der Anruf an einem Werktag oder am Sonntag oder sogar an einem Feiertag stattfindet,weil an diesen Tagen der Zugverkehr anders organisiert wird.

Es muß für jede Art von Tag eine extra Datenbank exestieren.

Diese Datenbank muß zu jedem Fahrplanwechsel neu aufgebessert werden.Außerdem kann sie nicht auf Unregelmäßigkeiten wie beispielsweise auf Verspätungen reagieren, weil sie statisch ist.

Wenn ein Zug von Hamburg nach Bremen mit der Zugnummer 20537 fährt,planmäßig nach zehn Minuten mit der Zugnummer 20538 zurückfahren soll und eine halbe Stunde Verspätung hat, dann ist der Zug in den letzten 20 Minuten schon unter der neuen Nummer (20538)zu erreichen,obwohl er noch die alte Zugnummer (20537)hat und auch so gerufen werden würde, weil jeder Betriebseisenbahner nur immer auf die derzeitige Zugnummer eingeht.

Der Betriebseisenbahner würde den Zug in den letzten 20 Minuten über die wahre Zugnummer rufen(20537), der Vermittlungscomputer würde unter 20537 nichts mehr finden,weil die Zeit für 20537 schon abgelaufen ist.

Der Vermittlungscomputer weiß ja nicht,daß der Zug Verspätung hat,weil er nicht auf dem laufenden gehalten wird.

Die statische Datenbank bietet sich für kleinere Eisenbahngesellschaften an,die einen kleinen und übersichtlichen Fahrplan haben und wenig Verspätungen einfahren.

Unempfindlicher gegen Unregelmäßigkeiten ist der Vermittlungscomputer,wenn er ständig auf dem laufenden gehalten wird.(variable Datenbank)

Dazu muß jeder Zugführer,bevor er einen Zug übernimmt oder die Zugnummer wechselt(bei Richtungswechsel)den Vermittlungscomputer anrufen,um ihm mitzuteilen,daß sein Handy mit der im Handy befindlichen SIM-Karte unter der Zugnummer,die er dem Vermittlungscomputer durch Sprechen der Zugnummer mitteilt,zu erreichen ist.

Der Vermittlungscomputer erkennt die einzeln gesprochenen Zahlen durch die computergestützte Spracherkennung.

Erst jetzt wird der Vermittlungscomputer der SIM-Karten-Nummer,die er in der Anmelderliste hat,die Zugnummer zuweisen,vorrausgesetzt der Anrufer war zugelassen.

Ab dem jetzigen Zeitpunkt ist der Zugführer unter seiner Zugnummer zu erreichen.Man kann sagen,daß der Zugführer sich durch seinen Anruf beim Vermittlungscomputer angemeldet hat,um ab diesem Zeitpunkt unter seiner Zugnummer erreichbar zu sein.

Die Datenbank ist in diesem Fall nicht statisch, sondern variabel.

Egal ob der Fahrplan wechselt,ob es Verspätungen gibt oder andere Unregelmäßigkeiten den Betriebsdienst beeinflussen,der Zugführer ist immer unter der aktuellen Zugnummer zu erreichen.

Es spielt auch keine Rolle,ob Werktag oder Sonntag ist.

Genauso unwichtig ist dem Vermittlungscomputer die Uhrzeit oder das Datum.

Der Zugführer teilt dem Vermittlungscomputer immer die neue Zugnummer mit,wenn der Zug tatsächlich anfängt zu exestieren.

Der große Nachteil hierbei ist,daß jeder Zug angemeldet werden muß.

Jede Anmeldung ist ein Anruf und jeder Anruf kostet Geld.

Wenn man bedenkt,daß Eisenbahngesellschaften mehrere tausend Züge täglich fahren,dann müßten auch genausoviele Anmeldungen durchgeführt werden.

Wie teuer das Anmelden einer Eisenbahngesellschaft kommen würde,hängt in starkem Maße davon ab, wie der Netzanbieter Kurzgespräche abrechnet.

Ein weiterer Nachteil ist die hohe Empfindlichkeit der computergestützten Spracherkennung.

Wenn ein Zugführer die Zugnummer durch Sprechen eingibt, dann könnten sich Nebengeräusche negativ auf den Sprechvorgang auswirken.

Die Dateneingabe mittels Subadressierung oder über die Teilnehmer-zu-Teilnehmer-Zeichengabe (beides ISDN-Leistungsmekmale siehe "Das große Telefonwerkbuch" vom Franzis-Verlag.) läuft ähnlich ab,wie die computergestützte Spracheingabe.

Auch hier handelt es sich um eine variable Datenbank,die ständig auf dem laufenden gehalten wird.

Nur werden in diesem Fall die Daten über die Handytastatur eingegeben.

Daraus ergeben sich folgende Vorteile:

Es muß zwar auch jeder Zug angemeldet werden,aber im Gegensatz zur computergestützten Sracherkennung findet hier gar kein richtiges Gespräch statt.

Wenn der Vermittlungscomputer angewählt wird,dann wird beim Wählvorgang die fünfstellige Zugnummer über die Tastatur "angehängt".

### Beispiel:

Die Nummer des Vermittlungscomputers lautet:2020 .

Ein Zugführer übernimmt einen Zug mit der Nummer 15246.

Um dem Vermittlungscomputer mitzuteilen,daß der Zugführer ab jetzt unter der Zugnummer 15246 zu erreichen ist,wählt der Zugführer: 202015246.

Der Vorteil dabei ist,daß der Vermittlungscomputer den Hörer garnicht abnehmen muß,um die Information(die Zugnummer) zu erhalten.

Wenn der Vermittlungscomputer den Hörer nicht abnimmt, dann gibt es kein Gespräch und wenn es kein Gespräch gibt,dann entstehen auch keine Kosten.

Der Zugführer muß nun nur noch darauf achten,daß er die richtige Zugnummer eingetippt hat.

Dann muß er nur warten,bis er einmal das Freizeichen gehört hat,danach kann er auflegen.

Ansonsten können keine Fehler bei der Übermittlung der Zugnummer entstehen.

Die Datenbank kann so kostenlos auf den aktuellen Stand gebracht und gehalten werden.

Der Vermittlungscomputer hat jetzt die SIM-Karten-Nummer und die entsprechenden Zugnummern in einer Anmedeliste gespeichert.

Er kann jetzt bei Bedarf angerufen werden.

Der Vermittlungscomputer ist so eingerichtet,daß er dem Anrufer entweder die gewünschte SIM-Karten-Nummer mitteilen,oder ihn mit dem gewünschten Zugführer verbinden kann.

Wenn ein Betriebseisenbahner einen Zugführer anrufen will, um ihm eine Mitteilung zu machen,dann wählt er den Vermittlungscomputer und hängt wiederrum die Zugnuummer an.

Er kann auch die Nummer des Zuges durch Spracheingabe übermitteln.

### Beispiel:

Ein Zugführer möchte einen anderen Zugführer anrufen.

Er wählt 202115246 .

Die 2021 hat er gewählt,um den Vermittlungscomputer anzuwählen.

Die Nummer muß sich von der Anmeldenummer unterscheiden, damit der Vermittlungscomputer weiß,daß der Anrufer eine Auskunft haben,oder verbunden werden will.

Die 15246 teilt dem Vermittlungscomputer mit, daß er die SIM-Karten-Nummer vom Zug 15246 heraussuchen und ausgeben soll.

Bei der computergestützten Spracheigabe wählt der Zugführer nur die 2021 und übermittelt die Zugnummer durch Spracheingabe.

Die SIM-Karten-Nummer wird genauso ausgegeben wie beispielsweise bei der Auskunft der Deutschen Telekom.

Nun hat der Zugführer die gewünschte Rufnummer und und kann den anderen Zugführer anrufen.

Es besteht aber auch die Möglichkeit,das Zugpersonal über den Vermittlungscomputer direkt anzuwählen.

Die Direktwahl ist dadurch gekennzeichnet, daß hier keine Auskunft erteilt,sondern direkt mit dem Handy des Zugführers verbunden wird.

Ein Betriebseisenbahner kann jetzt einen Zugführer im Durchwahlverfahren anrufen.

### Beispiel:

Ein Fahrdienstleiter wählt:202115246 .

Mit 2021 wählt er den Vermittlungscomputer und teilt ihm gleichzeitig mit,daß er ihn anruft,um verbunden zu werden.

Mit 15246 teilt der Fahrdienstleiter dem Vermittlungscomputer mit,mit wem er verbunden werden will.

Der Vermittlungscomputer sucht die entsprechende SIM-Karten-Nummer heraus und stellt die Verbindung her.

Die Datenbank des Vermittlungscomputers besitzt zwei Listen, auf der alle genehmigten Rufnummern aufgelistet sind.

Welche und wieviele Rufnummern diese Listen enthalten, das bestimmt die Eisenbahngesellschaft selbst.

Änderungen in diesen Listen können vorgenommen werden, z.B.wenn Handys abhanden kommen oder SIM-Karten-Verträge abgelaufen sind.

In der ersten Liste (Anmelderliste,zweiteilig)sind alle SIM_Karten-Nummern auf der linken Seite aufgeführt, die von Zugführern genutzt werden.

Auf der rechten Seite dieser Liste sind die entsprechenden Zugnummern aufgeführt,wenn der Zugführer sich beim Vermittlungscomputer angemeldet hat.

In der zweiten Liste (Vermittlerliste)sind alle Telefonnummern aufgeführt,die mit dem Zugpersonal kommunizieren dürfen.

Die SIM_Karten-Nummern des Zugpersonals sind natürlich in beiden Listen enthalten.

Wenn Anrufer den Vermittlungscomputer angewählt haben,dann wird die Nummer des Anrufers mit den Nummern der Liste verglichen.

Findet der Vermittlungscomputer die Nummer beim Vergleich, dann wird vermittelt oder angemeldet,wenn nicht dann wird der Anruf abgeblockt.

Die Listen bringen folgende Vorteile:

Sie schützten sämtliche Zugführer vor ungebetenen Anrufern.Man muß bedenken,daß die Zugnummern sogar öffentlich im Kursbuch stehen.

Die Zugführer selbst können sich anmelden und vermittelt werden.

Die restlichen Eisenbahner,dessen Telefonnummern nur auf der zweiten Liste stehen,können sich vermitteln lassen,sie können sich aber nicht anmelden.(sollen sie auch nicht)

### Ein Beispiel

Für dieses Beispiel gehen wir davon aus,daß es einen Vermittlungscomputer gibt,der die Zugnummer sowohl beim Anmelden als auch beim Vermitteln über die Subadressierung empfängt.

Beim Vermitteln wird auch keine Auskunft ausgegeben, sondern es wird sofort verbunden.

Der Vermittlungscomputer ist unter 2020 und 2021 zu erreichen.

Die Zugführer dürfen also die 2020 und die 2021 wählen. Sie dürfen sich anmelden(2020) und vermitteln (2021)lassen.Die anderen zugelassenen Eisenbahner dürfen sich nur vermitteln(2021)lassen.

Ein Zugführer hat einen Zug mit der Zugnummer 4466 übernommen.Er meldet sich beim Vermittlungscomputer folgendermaßen an: 202004466

Die 2020 hat der Zugführer eingegeben um den Vermittlungscomputer anzurufen und um ihm gleichzeitig mitzuteilen,daß er nicht vermittelt werden will,sondern, daß er sich nur anmelden will.

Er meldet sich nur an,um ab jetzt unter seiner Zugnummer erreichbar zu sein.

Da die eigentliche Zugnummer nur vier Stellen hat und fünfstellige Zahlen vereibart wurden,muß die Zugnummer rechtsbündig übergeben und mit in diesem Fall einer Null aufgefüllt werden.(04466)

(Dreistellige Zugnummern müssen mit zwei Nullen aufgefüllt werden.

Egal,ob ein Zug eine drei-,vier-oder fünfstellige Nummer hat,der Vermittlungscomputer kann besser arbeiten,wenn er immer Zugnummern mit gleicher Länge bekommt.)

Der Vermittlungscomputer hat alle SIM-Karten-Nummern,die eine Eisenbahngesellschaft für das fahrende Personal zulassen will,in einer zweiteiligen Anmelderliste gespeichert.

Die SIM-Karten-Nummern stehen auf der linken Seite der Liste.

Der Vermittlungscomputer überprüft zuerst,ob der Anrufer auch legal ist.

Der Anrufer ist dann legal,wenn der Vermittlungscomputer die SIM-Karten_Nummer des Zugführers in der Liste findet.

Findet er die Nummer nicht,dann wird die Zugnummer nicht eingetragen.

In unserem Beispiel findet der Vermittlungscomputer die selbe SIM-Karten-Nummer und trägt daraufhin auf der rechten Seite der Liste die Zugnummer ein.

Danach wird die gesamte rechte Seite der Liste noch mal durchsucht.

Wenn am Vortag ein anderer Zugführer den selben Zug mit der gleichen Zugnummer mit einem anderen Handy besetzt hatte, dann steht dieZugnummer noch auf der rechten Seite der Anmelderliste an falscher Stelle.

Findet der Vermittlungscomputer noch woanders die selbe Zugnummer,dann überschreibt er sie mit Nullen.

Ansonsten würden für eine Zugnummer mehrere verschiedene SIM-Karten-Nummern stehen.

Der Zug ist seit einer halben Stunde unterwegs.

Auf einem Zwischenbahnhof,auf dem der Zug nur zwei Minuten Aufenthalt hat,erscheint fünf Minuten vor Abfahrt des Zuges eine 30-köpfige Reisegruppe mit Fahrrädern.

Der Zug hat aber keinen Gepäckwagen und ist auch sonst nicht so darauf vorbereitet.

In der Realität läuft es so ab,daß der Zug ankommt,und sich eine unnötige Verspätung einhandelt, weil nichts vorbereitet ist.

Da der Aufsichtsbeamte nun die Zugnummer des betreffenden Zuges kennt,kann er den Zugführer mal schnell anrufen und ihn fragen,in welchen Wagen der meißte Platz ist, damit die Reisegruppe sich am Bahnsteig beim Einlaufen des Zuges am richtigen Platz postieren kann.

Darüberhinaus kann der Zugführer im Waggon die möglichen Vorbereitungen treffen.

Er weiß ja jetzt,was auf ihn zukommt und genau darin liegt ja auch der Sinn dieses Vermittlungsverfahrens.

Der Aufsichtsbeamte ruft den Zugführer folgendermaßen: 202104466

Die 2021 hat der Zugführer eingegeben um den Vermittlungscomputer anzurufen und um ihm gleichzeitig mitzuteilen,daß er vermittelt werden will.

Der Vermittlungscomputer hat die Telefonnummer des Aufsichtsbeamten in der Vermittlerliste gefunden.

Daraufhin geht der Vermittlungscomputer in dieAnmelderliste. sucht die Zugnummer(04466),und verbindet mit der entsprechenden SIM-Karten-Nummer des Zugführers.

Findet der Vermittlungscomputer die Telefonnummer des Aufsichtsbeamten nicht,dann wird die Verbindung unterbrochen.

Wenn der Aufsichtsbeamte den Vermittlungscomputer mit 202004466 gerufen hätte,dann hätte der Vermittlungscomputer die 04466 als Zugnummer aufgenommen,die Telefonnummer des anrufenden Aufsichtsbeamten mit den SIM-Karten-Nummern in der Anmelderliste verglichen und festgestellt,daß der Aufsichtsbeamte nicht auf der Anmelderliste vorhanden ist.

Daraufhin hätte der Vermittlungscomputer die Zugnummer "weggeschmissen".

## Patentansprüche

1. Vermittlungsverfahren für die Vereinfachung der Eisenbahnkommunikation, bei dem die Verknüpfung zwischen der eindeutigen Nummer eines Zuges und der SIM-Karten-Nummer eines Handy's des Zugführers bzw. des Zugpersonals,der/die in diesem Zug sitzt/sitzen durch einen Vermittlungscomputer durchgeführt wird,
wobei der Zugführer bzw. das Zugpersonal sich bei der Übernahme des Zuges mit einer bestimmten vorgegebenen Nummer,über die der Vermittlungscomputer angewählt wird,bei dem Vermittlungscomputer anmeldet,und dem Vermittlungscomputer die Zugnummer des übernommenen Zuges mitteilt,
wobei der Vermittlungscomputer die Nummer des Anrufers mit den Nummern einer Datenbank vergleicht und bei Übereinstimmung die Anmeldung durchführt,
sodass ein Anrufer einer geschlossenen Benutzergruppe bzw. die restlichen Eisenbahner unter Eingabe einer weiteren bestimmten Nummer,über die der Vermittlungscomputer angewählt wird, sowie der Zugnummer über den Vermittlungscomputer die SIM-Karten-Nummer des gewünschten Zugführers bzw.Zugpersonals erhält oder direkt mit ihm oder ihnen verbunden wird.

2. Vermittlungsverfahren nach Anspruch 1,dadurch gekennzeichnet,dass bei der Anmeldung des Zugführers bzw. Zugpersonals über die Handyastatur nach der bestimmten vorgegebenen Nummer,über die der Vermittlungscomputer angewählt wird,die Zugnummer eingegeben wird.

3. Vermittlungsverfahren nach Anspruch 1,dadurch gekennzeichnet,dass der Anrufer die weitere bestimmte vorgegebene Nummer,über die der Vermittlungscomputer angewählt wird,und die Zugnummer über die Tastatur eingibt.

4. Vermittlungsverfahren nach Anspruch 1,dadurch gekennzeichnet,dass dem Vermittlungscomputer die erforderlichen Nummern mittels computergestützter Spracheingabe mitgeteilt werden.

5. Vermittlungsverfahren nach Anspruch 1,dadurch gekennzeichnet,dass der Vermittlungscomputer die Handynummern der Zugführer bzw des Zugpersonals in einer Datenbank ablegt und die Telefonnummern der restlichen für dieses Vermittlungsverfahren zugelassenen Eisenbahnern in einer zweiten Datenbank speichert,indem sich dann auch die Handynummern der Zugbegleiter bzw. des Zugpersonals befinden,sodass nur die Zugbegleiter bzw das Zugpersonal sich anmelden können, jedoch alle zugelassenen Eisenbahner,auch die Zugbegleiter bzw. das Zugpersonal selbst vermittelt werden bzw. eine Auskunft erteilt bekommen können.
